# EUROPÄISCHE PATENTSCHRIFT

(11) **EP 3 028 894 B1**
(45) Veröffentlichungstag und Bekanntmachung des Hinweises auf die Patenterteilung: **15.11.2017**
(21) Anmeldenummer: 15184110.3
(22) Anmeldetag: 07.09.2015
(51) Int. Cl.: B60N 2/56, B60N 3/00, B60H 1/22

(54) **KLIMATISIERUNGSEINRICHTUNG FÜR EIN KRAFTFAHRZEUG**
AIR CONDITIONER FOR A MOTOR VEHICLE
DISPOSITIF DE CLIMATISATION POUR UN VEHICULE AUTOMOBILE

(30) Priorität: 13.11.2014 DE 102014223233
(43) Veröffentlichungstag der Anmeldung: 08.06.2016
(73) Patentinhaber: Volkswagen Aktiengesellschaft, 38440 Wolfsburg (DE)
(72) Erfinder: Wäller, Christoph, 38196 Braunschweig (DE); Enke, Lukas, 10999 Berlin (DE); Vrielink, Nils, 31234 Edemissen (DE)

(56) Entgegenhaltungen:
- EP-A1- 2 156 971
- EP-A1- 2 578 423
- FR-A1- 2 976 855
- US-A1- 2009 289 045

## Beschreibung

Die Erfindung bezieht sich auf eine Klimatisierungseinrichtung für ein Kraftfahrzeug mit wenigstens einem Passagiersitz und einem dem Passagiersitz vorgelagerten und mit seiner Rückwand dem Passagiersitz zugewandten Vordersitz, wobei zwischen dem Passagiersitz und dem Vordersitz ein von Boden- und Seitenwandungen umgebener Fußraum angeordnet ist, umfassend wenigstens ein in die Vordersitz-Rückwand und/oder die Fußraum-Wandung integriertes Rückraum-Klimaelement.

Derartige Klimatisierungseinrichtungen für Kraftfahrzeuge sind bekannt aus der DE 199 47 567 A1.

Diese Druckschrift beschäftigt sich mit der Klimatisierung von Passagiersitzen in Kraftfahrzeugen mit mehreren Passagiersitzreihen. Typische Beispiele hierfür sind Limousinen oder Omnibusse. Mit dem Begriff Passagiersitz wird im Rahmen der vorliegenden Beschreibung jeweils derjenige Sitz angesprochen, dessen unmittelbare Umgebung durch die hier diskutierten Rückraum-Klimaelemente beeinflusst werden soll. Mit dem Begriff des Vordersitzes ist der dem Passagiersitz jeweils unmittelbar, üblicherweise in Fahrtrichtung, vorgelagerte Sitz bezeichnet. Diese Bezeichnungen sind nicht auf die Vorder- bzw. Rücksitze einer Limousine beschränkt, sondern sind auch auf beliebige Sitze innerhalb eines viele Sitzreihen aufweisenden Kraftfahrzeugs, beispielsweise eines Omnibusses, zu verstehen.

Bei Kunden moderner Kraftfahrzeuge ist eine gesteigerte Anforderung nach klimatischem Komfort zu verzeichnen. Insbesondere bei Fahrzeugen höherer Segmente wird es als nicht mehr ausreichend empfunden, globale, d.h. im gesamten Fahrgastraum gleiche Klimaparameter einzustellen. Vielmehr wird eine Individualklimatisierung der einzelnen Sitzplätze als wünschenswert erachtet. Allerdings beschränken sich die technischen Anstrengungen im Wesentlichen auf die Optimierung der Klimatisierung des Fahrersitzes, wobei aufgrund der üblichen Symmetrie in Kraftfahrzeugen diese Anstrengungen meist auch auf den Beifahrersitz angewandt werden. Für die Individualklimatisierung der hinteren Sitzreihen sind bislang nur wenige Lösungsansätze bekannt. Dies hängt unter anderem auch wesentlich mit der schwierigeren Erreichbarkeit der hinteren Sitzreihen durch Klimatisierungsmaßnahmen im Vergleich zu der vordersten Sitzreihe, die im Bereich der Instrumententafel reichlich Platz für die Unterbringung von Klimaelementen bietet, zusammen. Mit dem Begriff des Klimaelementes sei im Rahmen der vorliegenden Beschreibung jedes technische Element bezeichnet, welches in der Lage und bestimmt ist, wenigstens in einem begrenzten räumlichen Einflussbereich Klimaparameter, wie insbesondere Temperatur, Luftfeuchte und/oder eine Luftströmungsgeschwindigkeit, gezielt zu beeinflussen.

Aus der oben genannten, gattungsbildenden Druckschrift ist es bekannt, in der Lehne eines Vordersitzes Luftleitkanäle zu verlegen und diese mit Luftauslasselementen in der rückwärtigen Fläche der Vordersitzlehne zu verbinden. Insbesondere sind Spot-Ausströmer im Bereich der Vordersitz-Kopfstütze, Diffusoren im Mittelbereich der Vordersitz-Lehne und erneut Spot-Ausströmer im unteren Bereich der Vordersitzlehne offenbart. Letztere erzeugen einen Luftstrom, der in den Fußraum des hinter dem Vordersitz angeordneten Passagiersitzes geleitet wird. Dieser Fußraum ist im Wesentlichen wannenförmig ausgebildet, und rückwärtig durch die Vorderkante des Passagiersitzes, vorne durch die Rückseite oder einen Sockel des Vordersitzes und seitlich durch die Wandungen der Mittelkonsole bzw. des Türrahmens begrenzt. Die untere Grenze des Fußraumes wird vom Fahrzeugboden bzw. einer darauf aufgelegten Fußmatte gebildet. Die besagte Druckschrift offenbart somit eine Einrichtung zur konvektiven Beeinflussung des Mikroklimas im Rückraum des Vordersitzes, d.h. im unmittelbaren Umgebungsbereich des Passagiersitzes, was hinsichtlich des häufig als unangenehm empfundenen Luftzuges und der damit verbundenen Geräuschentwicklung als nachteilig anzusehen ist.

Eine ähnliche Vorrichtung, die jedoch nur Spot-Ausströmer im Bereich der Kopfstütze und des Mittelteils des Vordersitzes aufweist, ist in der DE 10 2009 043 112 A1 offenbart.

Ferner ist aus der US 2009/0289045 eine Anordnung zur Heizung des Fußraums in einem Fahrzeug bekannt, wobei Heizelemente sowohl auf der Rückseite eines Vordersitzes als auch auf der Vorderseite der Hintersitze angeordnet sind. Passagiere, die sich auf den Rücksitzen befinden, können so eine Erwärmung im Fußbereich von zwei Seiten erfahren.

Des Weiteren offenbart die EP 2 156 971 A1 eine energetisch optimierte Möglichkeit zur Ansteuerung einer Sitzheizung und eines oder mehrerer elektrischer Heizelemente an Innenwänden eines Kraftfahrzeuges.

Es ist die Aufgabe der vorliegenden Erfindung eine gattungsgemäße Klimatisierungseinrichtung derart weiterzubilden, dass bei geringerer Geräuschentwicklung ein höherer Klimakomfort erzielbar ist.

Diese Aufgabe wird in Verbindung mit den Merkmalen des Oberbegriffs von Anspruch 1 dadurch gelöst, dass in die Vordersitz-Rückwand ein Klapptisch integriert ist, dessen im zugeklappten Zustand dem Passagiersitz zugewandte Unterseite die Temperierfläche aufweist.

Bevorzugte Ausführungsformen der Erfindung sind Gegenstand der abhängigen Ansprüche.

Der Kerngedanke der vorliegenden Erfindung ist es, die aufwendige und im Ergebnis suboptimale Verlegung von Luftleitkanälen und Luftausströmern in den an die Klima-Mikrozelle des Passagiersitzes angrenzenden Wandungen wenigstens teilweise durch in diese Wandungen integrierte Temperierflächen zu ersetzen. Der grundsätzliche Einsatz von elektrischen Temperierflächen zur Raumklimatisierung ist dem Fachmann bekannt. Ihr spezifischer Einsatz in der ansonsten nur schwer zugänglichen klimatischen Mikrozelle eines einem Vordersitz nachgelagerten Passagiersitzes ist jedoch bislang völlig unbekannt und zeitigt erhebliche Vorteile. Zum einen wird die Installation wesentlich erleichtert, da die elektrischen Temperierflächen lediglich über elektrische Leitungen mit Energieversorgungs- und Steuerelementen verbunden sein müssen. Dies erhöht wesentlich die Flexibilität des räumlichen Einsatzes, was zu einer Optimierung des Klimakomforts in der Mikrozelle genutzt werden kann. Weiter ist mit der Temperierung durch elektrische Temperierflächen keine Geräuschentwicklung verbunden, sodass auch der akustische Komfort gesteigert wird. Schließlich ist es insbesondere von als Wärmestrahler ausgebildeten Temperierflächen bekannt, dass ihre Temperierwirkung als deutlich angenehmer empfunden wird konvektive Temperierung.

So ist auch bei einer bevorzugten Ausführungsform der Erfindung vorgesehen, dass wenigstens eine Temperierfläche als Infrarotstrahlerfläche ausgebildet ist. Der Fachmann wird verstehen, dass aus Sicherheitsgründen hier in erster Linie sogenannten Niedertemperatur-Infrarotstrahler, deren Oberflächentemperatur nicht über 60° C ansteigt zum Einsatz kommen können. Solche Elemente sind als starre Platten oder als mattenartige, flexible Module bekannt. Letztere haben den Vorteil, in quasi beliebiger Form zuschneidbar zu sein.

Bei einer bevorzugten Weiterbildung der Erfindung ist daher auch vorgesehen, dass wenigstens eine Infrarotstrahlerfläche als ein mattenartiger Zuschnitt eines flexiblen Niedertemperatur-Infrarotstrahlers ausgebildet ist, mit dem die Fußraum-Wandung wenigstens bereichsweise ausgekleidet ist. Mit anderen Worten wird die oben erläuterte Wanne des Fußraums mit einer heizenden Auskleidung versehen, die großflächig und allseitig die Füße und unteren Beinpartien des auf den Passagiersitz sitzenden Passagiers wärmt. Die Füße stehen somit quasi in einem Wärmesee, was als besonders angenehm empfunden wird. Selbstverständlich ist es dabei möglich, dass Teilbereiche der Auskleidung, beispielsweise die Bodenauskleidung, aus einem starren Strahlermaterial gefertigt sind.

Alternativ oder zusätzlich kann vorgesehen sein, dass wenigstens eine Infrarotstrahlerfläche als ein in der Wandung versenkter Hochtemperatur-Infrarotstrahler ausgebildet ist, der bündig mit den ihn umgebenden Wandungsbereichen mit einem für Infrarotlicht durchlässigen und sichtbares Licht reflektierenden Blendenmaterial verblendet ist. Aus Sicherheitsgründen können Hochtemperatur-Infrarotstrahler, d.h. Infrarotstrahler, deren Oberflächen 60° C übersteigt, nicht ungeschützt verbaut werden. Gleichwohl wird ihre Wärmestrahlungswirkung als besonders behaglich empfunden. Solche Strahler sind häufig in Röhrenform ausgebildet. Zur Schaffung der erfindungsgemäßen Temperierfläche ist eine mit der Wandung bündige Verblendung vorgesehen. Es sind Materialien bekannt, die sichtbares Licht reflektieren, aber für Infrarotlicht durchlässig sind. Solche Materialien eignen sich besonders als Blendenmaterial. Für die Funktion der Temperierfläche ist die Transmissivität für Infrarotlicht zwingend. Die fehlende Durchlässigkeit für sichtbares Licht verhindert störende optische Effekte durch die bei Hochtemperatur-Infrarotstrahlern meist zusätzlich zum Infrarotlicht ausgesandte sichtbar rote Strahlung. Die Reflektivität des Blendenmaterials für sichtbares Licht hat gegenüber einer Absorption den Vorteil geringerer Aufheizung des Blendenmaterials.

Insbesondere, jedoch nicht ausschließlich, bei derartigen Hochtemperatur-Infrarotstrahlern kann es erforderlich sein, entstehende Abwärme abzuführen. Hierzu ist bei einer Weiterbildung der Erfindung vorgesehen, dass in der das Rückraum-Klimaelement tragenden Wandung ein Luftleitkanal integriert ist, dessen Luft zum Abführen von Abwärme der Temperierfläche zu dieser hin und im Anschluss zu einer in den Fußraum gerichteten Luftauslassdüse leitbar ist. Hierdurch wird die anfallende Abwärme zur Ausbildung einer konvektiven Fußraumheizung genutzt, sodass insbesondere in Verbindung mit der oben erläuterten Infrarotheizung des Fußraums eine hybride Fußraumheizung realisiert wird.

Insbesondere bei Fahrzeugen der Luxusklasse ist regelmäßig in der Vordersitzrückwand ein Klapptisch integriert, um den auf dem Passagiersitz sitzenden Passagier ein Arbeiten mit einem Laptop oder Akten zu erleichtern. Erfindungsgemäß ist vorgesehen, dass dessen im zugeklappten Zustand dem Passagiersitz zugewandte Unterseite eine Temperierfläche aufweist. Mit anderen Worten wird die Unterseite des Klapptischs als erfindungsgemäße Temperierfläche genutzt. Dies hat den besonderen Vorteil, dass bei herunter geklapptem Tisch die Temperierfläche sehr nah an den Oberschenkeln des Passagiers positioniert ist, sodass eine angenehme und sehr effiziente Temperierung dieser Körperteile stattfinden kann. Nicht nur in diesem, sondern auch im Kontext der zuvor erläuterten Ausführungsformen sind die Temperierflächen nicht auf Heizflächen beschränkt. Selbstverständlich sind auch Kühlflächen, beispielsweise unter Nutzung der Pelletier-Technik, einsetzbar.

Günstigerweise ist die Aktivität jedes Rückraum-Klimaelementes durch eine Steuereinheit in Abhängigkeit von an das Steuerelemente übermittelten Sensordaten steuerbar. Dies entspricht der allgemein verbreiteten Philosophie einer Klimaautomatik.

Im Kontext der vorliegenden Erfindung und speziell im Kontext der oben erläuterten Klapptisch-Variante kann diesbezüglich vorgesehen sein, dass die Aktivität der Infrarot-Heizfläche der Klapptisch-Unterseite in Abhängigkeit von der mittels eines Sensors erfassten und an das Steuerelement übermittelten Klappstellungsdaten des Klapptisches steuerbar ist. Selbstverständlich mag es sinnvoll sein, zur Steuerung auch zusätzliche Sensordaten heranzuziehen, beispielsweise Temperatursensoren und/oder kameragestützte Bekleidungssensoren. Wird beispielsweise ermittelt, dass ein stark unterkühlter Passagier auf dem Passagiersitz platznimmt kann aus dem Abklappen des Klapptischs der Wunsch abgelesen werden, möglichst schnell und effizient aufgeheizt zu werden. Entsprechend kann die Klapptisch-Temperierfläche zu maximalem Heizen angesteuert werden. Selbstverständlich ist der Fachmann in der Auswahl der Steueralgorithmen und Steuerphilosophien für die Klimaautomatisierung in keiner Weise beschränkt.

Weitere Merkmale und Vorteile der Erfindung ergeben sich aus der nachfolgenden, speziellen Beschreibung und den Zeichnungen.

Es zeigen:
- Figur 1:: einen Vordersitz mit Klimaausstattung gemäß einer ersten gattungsgemäßen Ausführungsform in zwei Ansichten,
- Figur 2:: einen Vordersitz mit Klimaausstattung gemäß einer Ausführungsform der Erfindung,
- Figur 3:: einen Vorder- und einen Passagiersitz mit Klimaausstattung gemäß einer dritten Ausführungsform der Erfindung.

Gleiche Bezugszeichen in den Figuren weisen auf gleiche oder analoge Elemente hin.

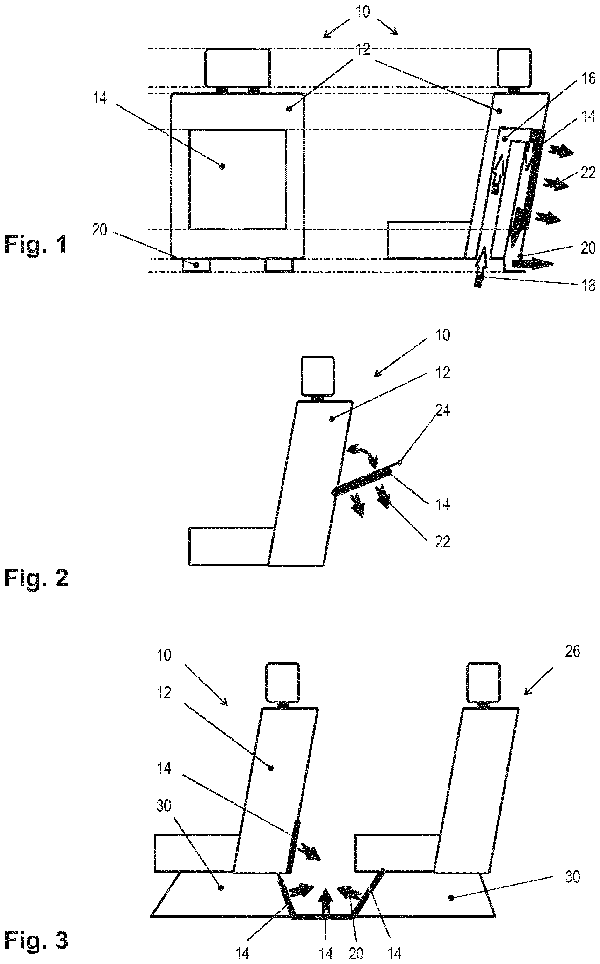

Figur 1 zeigt einen Vordersitz 10 mit Klimaausstattung gemäß einer ersten gattungsgemäßen Ausführungsform. Die linke Teilfigur zeigt dabei eine Rückansicht eines Vordersitzes 10, wie sie sich einem auf einem nicht dargestellten Passagiersitz, der unmittelbar hinter dem Vordersitz angeordnet ist, sitzenden Passagier bietet. Die rechte Teilfigur zeigt eine Schnittdarstellung des Vordersitzes 10. In die Rückfläche der Rückenlehne 12 des Vordersitzes 10 ist eine großflächige Temperierfläche 14 eingebettet. Detail der Ausgestaltung der Temperierfläche 14 sind in Figur 1 nicht gezeigt und spielen auch für den Kern der vorliegenden Erfindung keine Rolle. Rein beispielhaft kann die Temperierfläche 14 als starre, beispielsweise keramische IR-Strahlerfläche ausgebildet sein. Hier bieten sich insbesondere am Markt erhältliche Niedertemperatur-Infrarotstrahlerflächen an. Eine derartige starre Platte wird vorteilhafterweise in die Stützkonstruktion des Vordersitzes 10 integriert und schließt weitgehend bündig mit dessen Bezug, der hier eine entsprechende Ausnehmung aufweist, ab. Möglich ist selbstverständlich auch eine Überspannung der Temperierfläche 14 mit dem Sitzbezug, sofern es sich dabei um ein gut wärmeleitendes und/oder IR-durchlässiges Material handelt. Denkbar ist auch die Ausgestaltung der Temperierfläche 14 aus einem flexiblen, mattenartigen Material, welches an der dargestellten Stelle den Sitzbezug des Vordersitzes 10 ergänzt. Schließlich ist es auch möglich, Hochtemperatur-Infrarotstrahler in die Stützkonstruktion des Vordersitzes 10 zu integrieren und mit einer mit der Rückfläche der Rückenlehne 12 bündig abschließenden Abdeckung zu verblenden.

Insbesondere im letzteren Fall wird es erforderlich sein, die nicht nutzbare Abwärme der Infrarotstrahler geeignet abzuführen. Hierzu ist, wie in der rechten Teilfigur von Figur 1 erkennbar, die Rückenlehne 12 mit einem internen Luftleitkanal 16 ausgestattet. Dieser ist in nicht dargestellter Weise an ein Lüftungssystem des Fahrzeugs angeschlossen. Der Luftleitkanal 16 leitet von dem Lüftungssystem gelieferte Luft an der Vorderseite der Temperierfläche 14 vorbei, insbesondere unter Umspülung dort befindlichen Hochtemperatur-Infrarotstrahlern, wobei sich die Luft entsprechend erwärmt. Dies ist durch den Farbumschlag der Konvektionspfeile 18 dargestellt. Über einen im unteren Bereich der Rückseite der Rückenlehne 12 angeordneten Luftauslass 20 strömt die erwärmte Luft in den in Figur 1 nicht näher dargestellten Fußraum des dem Vordersitz 10 nachgelagerten Passagiersitz. Es entsteht eine die Abwärme der Temperierfläche 14 nutzende, konvektive Heizung des Fußraums. Zusammen mit der durch die Strahlungspfeile 22 angedeuteten Wärmestrahlung der Temperierfläche 14 ist bei der gezeigten Ausführungsform eine sehr effiziente und komfortable Hybridheizung realisiert.

Bei der Ausführungsform von Figur 2 ist die Temperierfläche 14 als Unterseite eines an der Rückseite der Rückenlehne 12 angelenkten Klapptischs ausgebildet. Für diese Anwendung bieten sich insbesondere die oben bereits beschriebenen Niedertemperatur-Infrarotstrahler an.

In Figur 3 ist außer dem Vordersitz 10 auch der diesem unmittelbar nachgelagerte Passagiersitz 26 dargestellt. Zwischen beiden befindet sich der Fußraum 28 des Passagiersitzes 26. Der Fußraum 28 ist im Wesentlich wannenförmig ausgebildet. Im Fall einer herkömmlichen Limousine sind in der Regel meist auch noch in Figur 3 nicht erkennbare Seitenwandungen vorgesehen, die von den Oberflächen des Kardantunnels bzw. des Seitentürrahmens gebildet werden. Die nachfolgende Erläuterung ist daher auch auf solche Flächen zu beziehen.

Bei der in Figur 3 gezeigten Ausführungsform sind die den Fußraum 28 umgebenden Wandungen mit Temperierflächen 14 ausgestattet. Eine erste Temperierfläche 14 ist in der Rückseite der Rückenlehne 12 des Vordersitzes 10 integriert. Diesbezüglich wird auf die Erläuterung zu Figur 1 verwiesen. Weitere Temperierflächen 14 finden sich in der Rückseite des Sitzsockels 30 des Vordersitzes 10, in der Vorderseite des Sitzsockels 30 des Passagiersitzes 26 sowie auf dem Boden 32 des Fußraums 28. Für letztere wird es als besonders günstig angesehen, sie in Form einer flexiblen Matte auszugestalten. Die als Sitzsockelverkleidungen ausgestalteten Temperierflächen 14 können sowohl als steife wie auch als flexible Elemente ausgestaltet sein. Hinsichtlich der Technik sind hier sowohl Hochals auch Niedertemperaturvarianten möglich.

Zur Nachrüstung eines Kraftfahrzeugs mit einer erfindungsgemäßen Klimatisierungsvorrichtung kann ein den Wandungen des Fußraums 28 angepasster, flexibler Mattenzuschnitt mit elektrischen Zuleitungen als modulare Einheit vorgesehen sein, mit der der Fußraum 28 nachträglich auslegbar ist. Zur elektrischen Energieversorgung sind die Zuleitungen mit dem Bordnetz des Kraftfahrzeugs zu verbinden, beispielsweise über im Innenraum vorgesehene Anschlussdosen. Zur Steuerung ist es denkbar, die Anschlussdosen selbst in ein zentrales Klimasteuersystem des Kraftfahrzeugs einzubinden. Gerade bei Nachrüst-Kits wird es in der Regel jedoch günstiger sein, die elektrischen Zuleitungen des Mattenzuschnitts mit einem vom Passagier bedienbaren Steuergerät auszustatten, wobei die spezielle Gestaltung eines solchen Steuergeräts vom einfachen Ein-/Aus-Schalter bis hin zu einer komplexen, mit Sensoren versehenen Steuereinheit reicht.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Vordersitz
- 12: Rückenlehne von 10
- 14: Temperierfläche
- 16: Luftkanal
- 18: Konvektionspfeil
- 20: Luftauslassöffnung
- 22: Strahlungspfeil
- 24: Klapptisch
- 26: Passagiersitz
- 28: Fußraum
- 30: Sitzsockel
- 32: Fußraumboden

## Patentansprüche

1. Klimatisierungseinrichtung für ein Kraftfahrzeug, umfassend wenigstens einem Passagiersitz (26) und einem dem Passagiersitz (26) vorgelagerten und mit seiner Rückwand dem Passagiersitz (26) zugewandten Vordersitz (12), wobei zwischen dem Passagiersitz (26) und dem Vordersitz (12) ein von Boden- und Seitenwandungen umgebener Fußraum (28) anordenbar ist, wenigstens ein in die Vordersitz-Rückwand integriertes Rückraum-Klimaelement (14) das als eine, als elektrische Temperierfläche (14) ausgebildete, Wandungsfläche gestaltet ist,
**dadurch gekennzeichnet,**
**dass** in die Vordersitz-Rückwand ein Klapptisch (24) integriert ist, dessen im zugeklappten Zustand dem Passagiersitz (26) zugewandte Unterseite die Temperierfläche (14) aufweist.

2. Klimatisierungseinrichtung nach Anspruch 1,
**dadurch gekennzeichnet,**
**dass** diese wenigstens ein in die Fußraumwandung integriertes Rückraum-Klimaelement (14) umfasst, das als eine, als elektrische Temperierfläche (14) ausgebildete, Wandungsfläche gestaltet ist.

3. Klimatisierungseinrichtung nach einem der Ansprüche 1 oder 2,
**dadurch gekennzeichnet,**
**dass** wenigstens eine Temperierfläche (14) als Infrarotstrahlerfläche ausgebildet ist.

4. Klimatisierungseinrichtung nach Anspruch 2 oder 3,
**dadurch gekennzeichnet,**
**dass** wenigstens eine Infrarotstrahlerfläche als ein mattenartiger Zuschnitt eines flexiblen Niedertemperatur-Infrarotstrahlers ausgebildet ist, mit dem die Fußraum-Wandung wenigstens bereichsweise ausgekleidet ist.

5. Klimatisierungseinrichtung nach einem der vorangehenden Ansprüche,
**dadurch gekennzeichnet,**
**dass** wenigstens eine Infrarotstrahlerfläche als ein in der Wandung versenkter Hochtemperatur-Infrarotstrahler ausgebildet ist, der bündig mit den ihn umgebenden Wandungsbereichen mit einem für Infrarotlicht durchlässigen und sichtbares Licht reflektierenden Blendenmaterial verblendet ist.

6. Klimatisierungseinrichtung nach einem der vorangehenden Ansprüche,
**dadurch gekennzeichnet,**
**dass** in der das Rückraum-Klimaelement tragenden Wandung ein Luftleitkanal (16) integriert ist, mittels dessen Luft zum Abführen von Abwärme der Temperierfläche (14) zu dieser hin und im Anschluss zu einer in den Fußraum (32) gerichteten Luftauslassdüse (20) leitbar ist.

7. Klimatisierungseinrichtung nach einem der vorangehenden Ansprüche,
**dadurch gekennzeichnet,**
**dass** die Aktivität jedes Rückraum-Klimaelementes durch eine Steuereinheit in Abhängigkeit von an das Steuerelement übermittelten Sensordaten steuerbar ist.

8. Klimatisierungseinrichtung nach den Ansprüchen 7,
**dadurch gekennzeichnet,**
**dass** die Aktivität der Temperierfläche (14) der Klapptisch-Unterseite in Abhängigkeit von der mittels eines Sensors erfassten und an das Steuerelement übermittelten Klappstellungsdaten des Klapptisches (24) steuerbar ist.

## Claims

1. Air-conditioning device for a motor vehicle, comprising at least one passenger seat (26) and one front seat (12) which is mounted in front of the passenger seat (26) and, by way of its rear wall, faces the passenger seat (26), wherein a footwell (28), which is surrounded by bottom and side walls, can be arranged between the passenger seat (26) and the front seat (12), at least one rear area air-conditioning element (14) which is integrated into the front seat rear wall and is configured as a wall face which is in the form of an electrical temperature-control face (14), **characterized in that** a folding tray (24) is integrated into the front seat rear wall, the bottom side of the said folding tray, which bottom side faces the passenger seat (26) in the folded-up state, comprises the temperature-control face (14).

2. Air-conditioning device according to Claim 1, **characterized in that** it comprises at least one rear area air-conditioning element (14) which is integrated into the footwell wall and which is configured as a wall face which is in the form of an electrical temperature-control face (14).

3. Air-conditioning device according to either of Claims 1 and 2, **characterized in that** at least one temperature-control face (14) is in the form of an infrared radiator face.

4. Air-conditioning device according to Claim 2 or 3, **characterized in that** at least one infrared radiator face is in the form of a mat-like blank of a flexible low-temperature infrared radiator with which the footwell wall is lined at least in regions.

5. Air-conditioning device according to one of the preceding claims, **characterized in that** the at least one infrared radiator face is in the form of a high-temperature infrared radiator recessed in the wall and is clad flush with the wall regions surrounding it by a cladding material which is transparent to infrared light and reflective to visible light.

6. Air-conditioning device according to one of the preceding claims, **characterized in that** an air-guiding channel (16) is integrated in the wall which is fitted with the rear area air-conditioning element, it being possible for the said air-guiding channel to be used to conduct air for dissipating waste heat from the temperature-control face (14) in the direction of said temperature-control face and then to an air outlet nozzle (20) which is directed into the footwell (32).

7. Air-conditioning device according to one of the preceding claims, **characterized in that** the activity of each rear area air-conditioning element can be controlled by a control unit depending on sensor data which is transmitted to the control element.

8. Air-conditioning device according to Claim 7, **characterized in that** the activity of the temperature-control face (14) of the folding tray bottom side can be controlled depending on the folding position data of the folding tray (24), which folding position data is detected by means of a sensor and is transmitted to the control element.

## Revendications

1. Dispositif de climatisation pour un véhicule automobile comprenant
au moins un siège de passager (26) et un siège avant (12) placé devant le siège de passager (26) avec son dos faisant face au siège de passager (26), un espace pour les pieds (28) entouré par des parois de fond et latérales pouvant être disposé entre le siège de passager (26) et le siège avant (12),
au moins un élément de climatisation d'espace arrière (14), qui est réalisé sous la forme d'une surface de paroi configurée comme une surface d'équilibrage de température (14) électrique, intégré dans le dos du siège avant,
**caractérisé en ce que**
un plateau rabattable (24) est intégré dans le dos de siège avant, dont le côté inférieur qui, en position repliée, fait face au siège de passager (26), comporte la surface d'équilibrage de température (14).

2. Dispositif de climatisation selon la revendication 1, **caractérisé en ce que** celui-ci comprend au moins un élément de climatisation d'espace arrière (14) intégré dans la paroi d'espace pour les pieds, lequel est réalisé sous la forme d'une surface de paroi configurée comme une surface d'équilibrage de température (14) électrique.

3. Dispositif de climatisation selon l'une des revendications 1 ou 2, **caractérisé en ce qu'**au moins une surface d'équilibrage de température (14) est réalisée sous la forme d'une surface rayonnant des infrarouges.

4. Dispositif de climatisation selon la revendication 2 ou 3, **caractérisé en ce qu'**au moins une surface rayonnant des infrarouges est réalisée sous la forme d'une pièce découpée de type tapis d'un radiateur à infrarouges à basse température avec laquelle la paroi de la zone des pieds est revêtue au moins dans certaines zones.

5. Dispositif de climatisation selon l'une des revendications précédentes, **caractérisé en ce qu'**au moins une surface rayonnant des infrarouges est réalisée sous la forme d'un radiateur à infrarouges à haute température encastré dans la paroi, lequel est à fleur des zones de paroi qui l'entourent et paré avec un matériau de parement laissant passer la lumière infrarouge et réfléchissant la lumière visible.

6. Dispositif de climatisation selon l'une des revendications précédentes, **caractérisé en ce qu'**un conduit d'air (16) est intégré dans la paroi qui comporte l'élément de climatisation d'espace arrière, lequel permet d'acheminer vers la surface d'équilibrage de température (14) l'air destiné à évacuer la chaleur dissipée par celle-ci et, à la sortie, conduire celui-ci vers une buse de sortie d'air (20) dirigée dans l'espace pour les pieds (32).

7. Dispositif de climatisation selon l'une des revendications précédentes, **caractérisé en ce que** l'activité de chaque élément de climatisation d'espace arrière peut être commandée par une unité de commande en fonction de données de capteur communiquées à l'élément de commande.

8. Dispositif de climatisation selon la revendication 7, **caractérisé en ce que** l'activité de la surface d'équilibrage de température (14) du côté inférieur du plateau rabattable peut être commandée en fonction des données de position rabattue du plateau rabattable (24), acquises au moyen d'un capteur et communiquées à l'élément de commande.
